(19) Europäisches Patentamt
European Patent Office
Office européen des brevets

(11) **EP 2 501 011 A2**

(12) **DEMANDE DE BREVET EUROPEEN**

(43) Date de publication:
**19.09.2012 Bulletin 2012/38**

(51) Int Cl.:
**H02J 3/00** *(2006.01)*

(21) Numéro de dépôt: **11305417.5**

(22) Date de dépôt: **08.04.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.03.2011 EP 11305310**

(71) Demandeur: **Thomson Licensing**
**92130 Issy-les-Moulineaux (FR)**

(72) Inventeurs:
 • **Massoulie, Laurent**
   **92130, Issy-les-Moulineaux (FR)**
 • **Keshav, Srinivasan**
   **Waterloo  ON N2L3G1 (CA)**
 • **Hegde, Nidhi**
   **92130, Issy-les-Moulineaux (FR)**
 • **Salonidis, Theodoros**
   **92130, Issy-les-Moulineaux (FR)**

(74) Mandataire: **Ruellan-Lemonnier, Brigitte**
**Technicolor**
**European Patent Operations**
**1-5 Rue Jeanne d'Arc**
**92443 Issy-les-Moulineaux Cedex (FR)**

(54) **Gestion centralisée de l'alimentation en énergie d'une pluralité de réseaux locaux d'énergie**

(57)    L'invention porte sur la gestion de l'alimentation en énergie d'un réseau local de transport d'énergie.

L'invention concerne en particulier un système de gestion de l'alimentation en énergie d'un nombre n de réseaux $DEN_i$ locaux d'énergie où n≥2 et $1 \leq i \leq n$, chaque réseau $DEN_i$ local d'énergie comportant au moins un dispositif client $DCL_{DENi}$ pouvant consommer de l'énergie circulant sur ledit réseau $DEN_i$.

Selon un mode de réalisation de l'invention, ledit système comporte un dispositif $COM_{DENi}$ de commutation connecté à chaque réseau $DEN_i$, un moyen $PSD_{DENi}$ de stockage d'énergie connecté audit réseau $DEN_i$ au travers du dispositif $COM_{DENi}$ de commutation, et une station SUB pour alimenter en énergie les n réseaux $DEN_i$ au travers de son dispositif $COM_{DENi}$ de commutation, la station SUB recevant l'énergie d'un opérateur PSO, et la station SUB est configurée pour déterminer et assigner à chaque dispositif $COM_{DENi}$ de commutation :
- Un premier mode DRAIN dans lequel le moyen $PSD_{DENi}$ de stockage d'énergie fournit de l'énergie audit réseau $DEN_i$ ; ouUn second mode CHARGE dans lequel la station SUB fournit de l'énergie simultanément audit réseau $DEN_i$ et $audi_t$ moyen $PSD_{DENi}$ de stockage d'énergie.

Fig.1

**Description**

**Domaine de l'invention**

L'invention porte sur la gestion centralisée d'alimentation en énergie d'une pluralité de réseaux locaux d'énergie. L'invention concerne plus précisément un procédé et un système de gestion de l'alimentation en énergie d'une pluralité de réseaux locaux d'énergie destiné à éviter une rupture d'alimentation en énergie d'un desdits réseaux. L'invention concerne également une station de gestion de l'alimentation en énergie d'une pluralité de réseaux locaux d'énergie d'un tel système.

**Etat de la technique**

La question de la gestion de l'alimentation en énergie des réseaux d'énergie individuels est de plus en plus critique comme en témoignent les développements récents des compteurs intelligents ("smart grids" en anglais). Au niveau des réseaux d'énergie individuels, on observe depuis quelques années un développement rapide des systèmes de fourniture d'énergie basés notamment sur l'emploi de panneaux photovoltaïques couvrant les toits des habitations. Ces panneaux fournissent une énergie électrique renouvelable et bon marché lorsqu'ils sont illuminés par le soleil c'est-à-dire à un moment où le réseau domestique est peu consommateur d'énergie. En général, ces systèmes comprennent donc un moyen de stocker l'énergie autorisant un emploi différé de l'énergie notamment à des moments où le soleil est couché et où le besoin en énergie des habitations est supérieur. Par ailleurs, il est probable que dans quelques années, l'usage des véhicules électriques se sera développé et que les batteries de ces véhicules offriront une capacité de stockage d'énergie additionnelle substantielle une fois rangés à proximité desdites habitations.

Aujourd'hui, la gestion de ces moyens de stockage d'énergie est très rudimentaire : elle vise principalement à permettre de stocker le trop plein d'énergie produite pendant la journée par les panneaux photovoltaïques.

Les opérateurs qui fournissent de l'énergie aux particuliers distribuent l'énergie en s'appuyant sur un réseau de distribution dont l'architecture se termine en général par une structure « en étoile » : au centre de cette structure se trouve une station gérée par l'opérateur qui reçoit de l'énergie, aux extrémités des branches de la structure se trouvent les unités d'habitation à alimenter en énergie. Le rôle dévolu à la station est de recevoir de l'énergie d'un opérateur et de la répartir vers les unités d'habitation. Or il arrive que le niveau d'énergie que la station est capable d'acheminer jusqu'aux unités d'habitation ne soit pas toujours suffisant pour répondre aux demandes simultanées des unités d'habitation. Cette insuffisance a pour origine soit un trop faible niveau d'énergie acheminé par l'opérateur jusqu'à la station soit un débit d'énergie trop limité sur une partie du réseau de transport d'énergie entre la station et les réseaux locaux. Certaines des unités d'habitation peuvent être alors frappées par des ruptures temporaires d'approvisionnement en énergie.

L'objet de l'invention est d'éviter la rupture d'approvisionnement des unités d'habitation en recourant aux réserves d'énergie constituées préalablement dans les moyens de stockage d'énergie évoqués plus haut (qui sont disposés au niveau des unités d'habitation) et à un pilotage centralisé au niveau de la station de l'alimentation en énergie des unités d'habitation: ce pilotage vise à classer les unités d'habitation en fonction de l'urgence qu'il y a à les alimenter en énergie.

Quand la limite de fourniture en énergie de la station a pour origine une limite de production d'énergie, les différents modes de réalisation de l'invention permettent de pallier les insuffisances de moyens de production en répartissant temporellement les pics temporaires de demande d'énergie. Ceci est avantageux car le dimensionnement des moyens de production d'énergie est réalisé en général à partir de l'amplitude des pics de consommation d'énergie et il est très sensiblement moins coûteux de réduire l'amplitude des pics de consommation, peu fréquents, en répartissant la demande d'énergie des unités d'habitations (et donc la fourniture en énergie) sur une période plus étendue que de mettre en place un moyen de production d'énergie supplémentaire permettant de répondre à la demande du pic de consommation.

Quand la limite de fourniture en énergie de la station a pour origine un débit d'énergie trop limité sur une partie du réseau de transport d'énergie entre la station et les réseaux locaux, les différents modes de réalisation de l'invention permettent de pallier les insuffisances du réseau de distribution d'énergie en évitant un remplacement des parties du réseau ce qui constitue un gain de temps et d'argent pour l'opérateur fournisseur d'énergie.

L'invention est également avantageuse en ce qu'elle permet aux réseaux locaux d'énergie d'éviter les dégradations d'appareils consommateur d'énergie connectés à ces réseaux qu'ils rencontrent au cours de rupture d'alimentation en énergie et aux problèmes d'ordre pratiques induits par les défauts de fonctionnements de ces appareils.

**Exposé de l'invention**

L'idée à la base de l'invention est d'effectuer un classement au niveau de la station des unités d'habitations que la station est susceptible d'alimenter en énergie, ou des dispositifs de commutation des réseaux locaux de transport d'énergie que ces unités d'habitations comportent, selon un ordre d'urgence qu'il y a à leur fournir de l'énergie de l'extérieur. Ce classement est réalisé notamment sur la base du niveau d'énergie stockée dans les moyens de stockage d'énergie des habitations ou sur la base d'une estimation de probabilité d'absence de pénurie d'énergie au niveau des moyens de stockage d'énergie connectés auxdits réseaux sur une période temporelle à venir. Ces probabilités peuvent par exemple être déterminées en faisant une hypothèse processus de modulation Markovienne (« Markov modulated demand process » en anglais) en suivant par exemple des méthodes mise en oeuvre pour évaluer le trafic de données sur des réseaux de communication. Des exemples de telles méthodes sont présentées par BALI et AI dans l'article « An Algorithm for Fitting MMPP to IP Traffic Traces », IEEE Communications Letters, Vol. 11, No. 2; February 2007 ou bien encore par Asmussen dans l'ouvrage « Applied Probability and Queues », Second edition, Springer-Verlag, New-York, 2003.

La station détermine si les réseaux sont alimentés par de l'énergie fournie directement par l'opérateur fournisseur d'énergie ou par de l'énergie stockée dans leur moyen de stockage d'énergie, suivant le rang que ces réseaux occupent dans ce classement.

A cet effet, l'invention a pour objet, selon un premier aspect, un système de gestion de l'alimentation en énergie d'un nombre n de réseaux $DEN_i$ locaux d'énergie où $n \geq 2$ et $1 \geq i \geq n$, chaque réseau $DEN_i$ local d'énergie comportant au moins un dispositif client $DCL_{DENi}$ pouvant consommer de l'énergie circulant sur ledit réseau $DEN_i$.

Selon un mode de réalisation de l'invention, ledit système comporte un dispositif $COM_{DENi}$ de commutation connecté à chaque réseau $DEN_i$, un moyen $PSD_{DENi}$ de stockage d'énergie connecté audit réseau $DEN_i$ au travers du dispositif $COM_{DENi}$ de commutation, et une station SUB pour alimenter en énergie les n réseaux DENi au travers de son dispositif $COM_{DENi}$ de commutation, la station SUB recevant l'énergie d'un opérateur PSO, et la station SUB est configurée pour déterminer et assigner à chaque dispositif $COM_{DENi}$ de commutation :

- Un premier mode DRAIN dans lequel le moyen $PSD_{DENi}$ de stockage d'énergie fournit de l'énergie audit réseau $DEN_i$; ou
- Un second mode CHARGE dans lequel la station SUB fournit de l'énergie simultanément audit réseau $DEN_i$ et audit moyen $PSD_{DENi}$ de stockage d'énergie.

La station SUB considère un nombre K de périodes temporelles successives $T_k$ où $1 \leq k \leq K$.

Avantageusement, chaque dispositif $COM_{DENi}$ de commutation comporte des moyens pour délivrer à la station SUB un premier niveau $CSL_{DENi,Tk}$ d'énergie stockée dans le moyen de stockage d'énergie $PSD_{DENi}$ à l'issue de chaque période temporelle $T_k$ et la station SUB détermine à l'issue de la période temporelle $T_k$ un indice $EI_{DENi}$ d'urgence définissant un ordre de priorité pour assigner le second mode CHARGE au dispositif $COM_{DENi}$ de commutation pour la période $T_{k+1}$ à partir dudit premier niveau $CSL_{DENi,Tk}$.

Avantageusement, à l'issue de la période temporelle Tk, la station SUB classe les réseaux locaux $DEN_i$ suivant l'ordre croissant des indices d'urgence $EI_{DENi}$ de telle sorte qu'elle constitue une liste ordonnée de réseaux locaux $HDEN_j$ où $1 \leq j \leq n$ ; les éléments $HDEN_j$ de ladite liste ordonnée ont des indices $EI_{HDENj}$ d'urgence tels que $EI_{HDENj} \leq EI_{HDENj+1}$ pour $1 \leq j \leq n-1$ et $EI_{HDENN} = Max(EI_{DENi})$ ou $1 \leq i \leq n$ ·

On se place dans l'hypothèse où la station SUB a une capacité finie à fournir de l'énergie : autrement dit, la station SUB ne peut pas fournir plus qu'un niveau d'énergie $C_{SUB}$ pendant la période temporelle $T_k$.

Avantageusement, à l'issue de la période temporelle $T_k$, la station SUB détermine une valeur d'indice critique j* de telle sorte que le niveau d'énergie $C_{SUB}$ est compris entre un premier niveau d'énergie cumulée que la station SUB fournirait si elle assignait le second mode CHARGE aux j* premiers éléments de la liste ordonnée $HDEN_j$ pendant la période $T_{k+1}$ et un second niveau d'énergie cumulée que la station SUB fournirait si elle assignait le second mode CHARGE aux j*+1 premiers éléments de la liste ordonnée $HDEN_j$ pendant la période $T_{k+1}$ **et** la station SUB assigne pour la période temporelle $T_{k+1}$ le second mode CHARGE aux dispositifs $COM_{HDENj}$ de commutation des j* premiers éléments $HDEN_j$ de la liste ordonnée et le premier mode DRAIN aux dispositifs $COM_{HDENj}$ de commutation des n-j* derniers éléments $HDEN_j$ de ladite liste ordonnée.

Avantageusement, chaque dispositif $COM_{DENi}$ de commutation délivre à la station SUB, à l'issue de la période temporelle $T_k$, un second niveau $CPL_{DENi,Tk}$ d'énergie consommée par le dispositif client $DCL_{DENi}$ pendant ladite période temporelle $T_k$, la station SUB comporte des moyens pour stocker lesdits premiers niveaux $CSL_{DENi,Tk}$ et lesdits seconds niveaux $CPL_{DENi,Tk}$, la station SUB estime, à l'issue de la période temporelle $T_k$, une consommation en énergie $<PRL_{DENi,Tk+1}>$ du dispositif client $DCL_{DENi}$ pour la période temporelle $T_{k+1}$ à partir des seconds niveaux $CPL_{DENi,Tk}$ d'énergie stockés pour les périodes temporelles antérieures et la station SUB détermine la valeur d'indice critique j* à partir desdites consommation en énergie $<PRL_{DENi,Tk+1}>$.

Avantageusement, la station SUB comporte :

un moyen pour assigner au début de la période temporelle $T_{k+1}$ le premier mode DRAIN à tous les dispositifs de

commutation des réseaux DEN$_i$ et

un moyen pour assigner le second mode CHARGE aux dispositifs de commutation des réseaux DEN$_i$ jusqu'à ce que le niveau d'énergie stocké dans le moyen de stockage d'énergie correspondant soit maximum, lesdites assignations étant réalisées dans l'ordre de la liste ordonnée HDEN$_j$.

Avantageusement, l'indice EI$_{DENi}$ d'urgence a une valeur représentative du premier niveau CSL$_{DENi,Tk}$ d'énergie ou l'indice EI$_{DENi}$ d'urgence est une probabilité de pénurie d'énergie du moyen de stockage d'énergie PSD$_{DENi}$ pendant la période T$_{k+1}$ déterminée en faisant une hypothèse de processus de modulation Markovienne. Cette hypothèse est employée en général pour estimer des trafics de données sur des réseaux de communication.

L'invention a pour objet, selon un second aspect, une station SUB pour gérer l'alimentation en énergie d'un nombre n de réseaux DEN$_i$ locaux d'énergie où n≥2 et 1≤ i ≤n, chaque réseau DEN$_i$ local d'énergie comportant au moins un dispositif client DCL$_{DENi}$ pouvant consommer de l'énergie circulant sur ledit réseau DEN$_i$, un dispositif COM$_{DENi}$ de commutation étant connecté à chaque réseau DEN$_i$, un moyen PSD$_{DENi}$ de stockage d'énergie étant connecté audit réseau DEN$_i$ au travers du dispositif COM$_{DENi}$ de commutation, et une station SUB recevant de l'énergie d'un opérateur PSO et pouvant alimenter en énergie les n réseaux DEN$_i$ au travers de son dispositif COM$_{DENi}$, la station SUB considérant un nombre K de périodes temporelles successives T$_k$ où 1 ≤ k ≤ K.

Selon un mode de réalisation de l'invention, elle comporte :

- un moyen M1 configuré pour recevoir à l'issue de la période temporelle T$_k$ un premier niveau CSL$_{DENi,Tk}$ d'énergie stockée dans le moyen de stockage d'énergie PSD$_{DENi}$ à l'issue de la période temporelle T$_k$ ;
- un moyen M2 configuré pour stocker lesdits premiers niveaux CPL$_{DENi,Tk}$.
- un moyen M3 configuré pour déterminer et assigner à chaque dispositif COM$_{DENi}$ de commutation :

    o Un premier mode DRAIN dans lequel le moyen PSD$_{DENi}$ de stockage d'énergie fournit de l'énergie audit réseau DEN$_i$ ; ou
    o Un second mode CHARGE dans lequel la station SUB fournit de l'énergie simultanément audit réseau DEN$_i$ et audit moyen PSD$_{DENi}$ de stockage d'énergie.

L'invention a pour objet, selon un troisième aspect, un procédé de gestion de l'alimentation en énergie d'un nombre n de réseaux DEN$_i$ locaux d'énergie où n≥2 et 1≤ i ≤n, chaque réseau DEN$_i$ local d'énergie comportant au moins un dispositif client DCL$_{DENi}$ pouvant consommer de l'énergie circulant sur ledit réseau DEN$_i$, un dispositif COM$_{DENi}$ de commutation étant connecté à chaque réseau DEN$_i$, un moyen PSD$_{DENi}$ de stockage d'énergie étant connecté audit réseau DEN$_i$ au travers du dispositif COM$_{DENi}$ de commutation, et une station SUB pouvant alimenter en énergie les n réseaux DEN$_i$ au travers de son dispositif COM$_{DENi}$ de commutation, la station SUB recevant l'énergie d'un opérateur PSO, la station SUB considérant un nombre K de périodes temporelles successives T$_k$ où 1 ≤ k ≤ K, la station SUB étant configurée pour déterminer et assigner à chaque dispositif COM$_{DENi}$ de commutation pendant au moins une fraction de la période temporelle T$_{k+1}$ :

    o Un premier mode DRAIN dans lequel le moyen PSD$_{DENi}$ de stockage d'énergie fournit de l'énergie audit réseau DEN$_i$ ; ou
    o Un second mode CHARGE dans lequel la station SUB fournit de l'énergie simultanément audit réseau DEN$_i$ et audit moyen PSD$_{DENi}$ de stockage d'énergie.

Selon un mode de réalisation de l'invention, au niveau de la station SUB, au niveau de la station SUB, à l'issue de la période temporelle T$_k$, il comporte les étapes consistant à :

- S1 recevoir des dispositifs de commutation de tous les réseaux locaux DENi et stocker un premier niveau CSL$_{DENi,Tk}$ d'énergie stockée dans le moyen de stockage d'énergie PSD$_{DENi}$ à l'issue de chaque période T$_k$ ;
- S10 déterminer un indice EIDENi d'urgence définissant un ordre d'urgence pour assigner le second mode CHARGE au dispositif COM$_{DENi}$ de commutation pour la période T$_{k+1}$, lesdits indices EI$_{DENi}$ d'urgence sont déterminés à partir desdits premiers niveaux CSL$_{DEN1,Tk}$, ...,CSL$_{DENi,Tk}$, ..,CSL$_{DENn,Tk}$ associés au réseau DEN$_i$;
- S20 classer les réseaux locaux DEN$_i$ suivant l'ordre croissant des indices EI$_{DENi}$ d'urgence et constituer ainsi une liste ordonnée de réseaux locaux HDEN$_j$ où 1 ≤ j ≤n, les réseaux locaux HDEN$_j$ figurant dans ladite liste ordonnée ont des indices EI$_{HDENj,Tk}$ d'urgence tels que EI$_{HDENj}$ ≤ EI$_{HDENj+1}$ pour 1 ≤ j ≤ n-1 et EI$_{HDENN}$ = Max(EI$_{DENi}$) 1 ≤ i ≤ n ; S50 ; S51 assigner le second mode CHARGE à au moins un dispositif de commutation pour la période T$_{k+1}$ choisi à partir en fonction du rang j que le réseau local HDEN$_j$ occupe dans ladite liste ordonnée.

Avantageusement, ledit procédé comporte en outre les étapes consistant à :

- S1 recevoir de tous les dispositifs $COM_{DENi}$ de commutation un second niveau $CPL_{DENi,Tk}$ d'énergie consommée par le dispositif client $DCL_{DENi}$ pendant ladite période $T_k$ et stocker lesdits second niveau $CPL_{DENi,Tk}$ reçus ;
- S30 estimer une consommation en énergie $<PRL_{i,Tk+1}>$ du dispositif client $DCL_{DENi}$ pour la période temporelle $T_{k+1}$ à partir desdits premiers niveaux $CPL_{i,Tk}$ d'énergie stockés ;
- S40 déterminer, à l'issue de la période temporelle $T_k$, à partir des estimations de consommation en énergie $<PRL_{i,Tk+1}>$ du dispositif client $DCL_{DENi}$ pour la période temporelle $T_{k+1}$, une valeur d'indice critique j* de telle sorte que le niveau d'énergie $C_{SUB}$ est compris entre un premier niveau d'énergie cumulée que la station SUB fournirait si elle assignait le second mode CHARGE aux j* premiers réseaux locaux figurant dans la liste ordonnée $HDEN_j$ pendant la période $T_{k+1}$ et un second niveau d'énergie cumulée que la station SUB fournirait elle assignait le second mode CHARGE les j*+1 premiers réseaux locaux figurant dans la liste ordonnée $HDEN_j$ pendant la période $T_{k+1}$
- S50 assigner pendant la période temporelle $T_{k+1}$ le second mode CHARGE aux dispositifs de commutation des j* premiers réseaux locaux figurant dans la liste ordonnée $HDEN_j$ et le premier mode DRAIN aux dispositifs de commutation des n-j* derniers réseaux locaux figurant dans la liste ordonnée $HDEN_j$.

## Brève description des dessins

L'invention sera mieux comprise à la lecture de la description détaillée qui va suivre d'un exemple de réalisation de l'invention. Cette description est donnée uniquement à titre d'exemple et se réfère aux dessins annexés sur lesquels :

La figure 1 représente un réseau local d'énergie connecté à une station selon un mode de réalisation de l'invention ;
La figure 2a (respectivement 2b) représente le chemin suivi par l'énergie alimentant le réseau $DEN_1$ lorsque le dispositif de commutation $COM_1$ est placé dans un premier mode dit « DRAIN » (respectivement dans un second mode dit « CHARGE ») ;
La figure 3 représente un système de gestion de l'alimentation en énergie d'une pluralité de réseaux locaux d'énergie selon un mode de réalisation de l'invention, ledit système alimentant simultanément 4 réseaux locaux d'énergie ;
La figure 4 représente un ordinogramme d'un procédé de gestion de l'alimentation en énergie d'une pluralité de réseaux locaux d'énergie selon un premier mode de réalisation de l'invention ;
La figure 5 représente un exemple de mode de réalisation de l'étape S40 dudit procédé.
La figure 6 représente un ordinogramme d'un procédé de gestion de l'alimentation en énergie d'une pluralité de réseaux locaux d'énergie selon un second mode de réalisation de l'invention ;
La figure 7 représente une vue simplifié de l'architecture de la station SUB selon l'invention.

## Description détaillée des modes de réalisation préférés

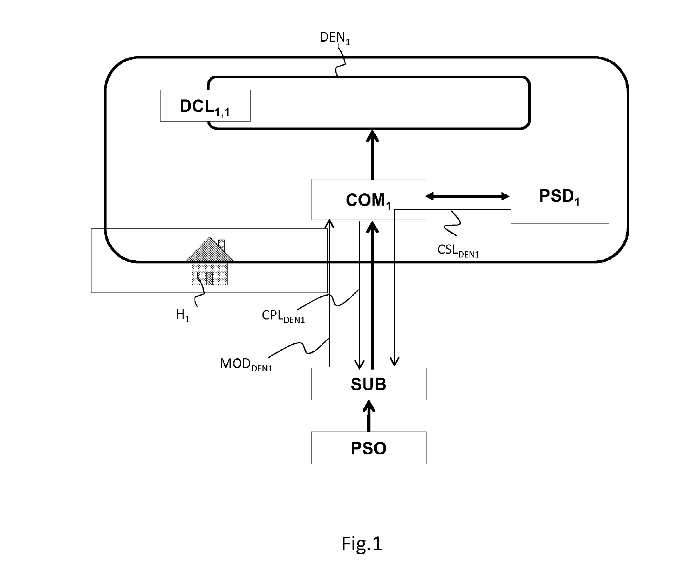

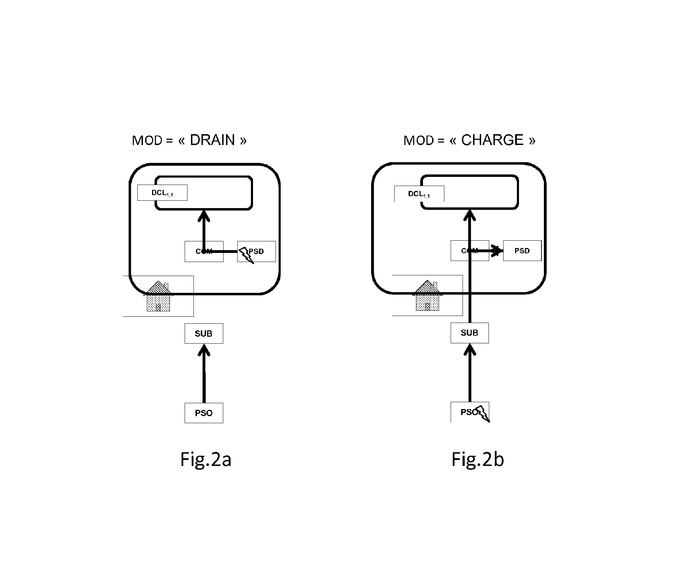

La figure 1 représente un réseau local de transport d'énergie $DEN_1$ comprenant au moins un dispositif client $DCL_{1,1}$ configuré pour consommer l'énergie véhiculée sur ledit réseau $DENT_1$.
Par « réseau local de transport d'énergie », on entend un réseau de transport d'énergie dans lequel l'accès de l'énergie est centralisé sur un noeud particulier où peut être placé un dispositif de commutation $COM_{DEN1}$. Ce dispositif de commutation $COM_{DEN1}$ est configuré pour commander l'alimentation en énergie de l'ensemble du réseau local $DEN_1$.
Dans la description qui suit, le réseau $DEN_1$ est un réseau local de transport d'électricité. Mais il va sans dire que le mode de réalisation de l'invention ne se limite pas à la gestion de l'alimentation en électricité de réseaux locaux de transport d'électricité.
Le réseau $DEN_1$ équipe par exemple une unité d'habitation individuelle : on parle alors de réseau domestique. Toutefois, les réseaux locaux de transport d'énergie $DEN_1$ ne se limitent pas aux seuls réseaux domestiques et peuvent aussi bien équiper des unités de production industrielle : par exemple un bâtiment comportant un équipement à vocation industrielle fonctionnant à partir d'énergie fournie par une source d'énergie externe au réseau $DEN_1$.
Un moyen de stockage d'énergie $PSD_{DEN1}$ est connecté au réseau $DEN_1$ via le dispositif $COM_{DEN1}$. Ainsi, le dispositif client $DCL_{1,1}$ qui est connecté au réseau électrique $DEN_1$ peut être alimenté en énergie électrique soit par de l'électricité directement fournie par un opérateur PSO fournisseur d'énergie: ici de l'électricité issue d'une source d'énergie électrique externe au réseau $DEN_1$ soit par de l'électricité stockée dans le moyen de stockage d'énergie $PSD_{DEN1}$. L'origine de l'électricité consommée par le dispositif $DCL_1$ est définie par le mode de configuration du dispositif $COM_{DEN1}$.
Placé dans un mode de configuration appelé « CHARGE », le dispositif de commutation $COM_{DEN1}$ autorise l'opérateur PSO à alimenter en énergie les dispositifs clients connectés au réseau $DEN_1$ par une source d'énergie extérieure au réseau local $DEN_1$. Placé dans un autre mode de configuration appelé « DRAIN », le dispositif de commutation $COM_{DEN1}$ peut bloquer l'alimentation en énergie du réseau $DEN_1$ par l'opérateur PSO et transformer le moyen de stockage d'énergie en source d'énergie pour les dispositifs clients connectés au réseau DEN. Ces modes de configurations seront exposés plus en détails à l'aide des figures 2a et 2b.
Le moyen de stockage $PSD_{DEN1}$ est préférentiellement un moyen fixe lié à l'unité d'habitation, ainsi le moyen de stockage $PSD_{DEN1}$ possède-t-il une capacité de stockage $MSL_{DEN1}$ finie, déterminée et constante dans le temps. Autrement dit, le moyen de stockage $PSD_{DEN1}$ peut stocker de l'énergie jusqu'à ce que le niveau d'énergie qu'il contient n'excède pas $MSL_{DEN1}$. Le moyen de stockage $PSD_{DEN1}$ constitue une source d'énergie pour alimenter le réseau $DEN_1$ tant que le niveau d'énergie qu'il contient est supérieur à 0.

Mais le moyen de stockage $PSD_{DEN1}$ pourrait aussi bien comporter des parties mobiles comme par exemple une batterie électrique d'un véhicule automobile offrant une capacité de stockage d'énergie uniquement lorsque le véhicule est rangé à proximité de l'habitation et que la batterie du véhicule est connectée au réseau local via le dispositif $COM_{DEN1}$. La description de l'invention ne serait changée qu'en ce que la capacité de stockage $MSL_{DEN1}$ fluctuerait dans le temps.

Dans la suite de la description, on fera l'hypothèse que l'opérateur PSO est le seul fournisseur d'électricité du réseau et qu'il fournit de l'électricité en provenance d'une unique source externe au réseau $DEN_1$. L'opérateur PSO transporte l'énergie produite par ladite source jusqu'au réseau local. L'énergie stockée dans le moyen de stockage $PSD_{DEN1}$ a la même origine : elle est fournie par l'opérateur PSO.

La source d'énergie est par exemple une centrale électrique à énergie nucléaire, il va sans dire que l'énergie fournie par l'opérateur PSO peut être produite par plusieurs sources simultanément.

La source d'énergie et le moyen de stockage $PSD_{DEN1}$ sont tous deux connectés au réseau $DEN_1$ au travers du dispositif de commutation $COM_{DEN1}$ qui peut être configuré suivant :

- Un premier mode, représenté schématiquement sur la figure 2a, dans lequel le moyen de stockage d'énergie $PSD_{DEN1}$ alimente seul le dispositif client $DCL_{1,1}$ avec l'énergie qu'il contient au travers du dispositif de commutation $COM_{DEN1}$ ; OU
- Un second mode, représenté schématiquement sur la figure 2b, dans lequel l'opérateur PSO fournit de l'énergie au dispositif client $DCL_{1,1}$ et charge simultanément en énergie (c'est-à-dire alimente en énergie) le moyen de stockage $PSD_{DEN1}$ au travers du dispositif de commutation $COM_{DEN1}$.

Sur la figure 1, les flèches en trait fin représentent les flux d'information, sur les figures 2a, 2b, et 2c, les flèches en trait épais représentent un flux d'énergie.

Sur les figures 2a, 2b, 2c, un éclair représente la source d'énergie alimentant le dispositif client $DCL_{1,1}$.

Dans la suite, on considèrera que la station SUB divise le temps en périodes temporelles $T_k$ ou $1 \leq k \leq K$ successives et de préférence de durée identiques. L'ensemble des périodes $T_k$ forme un cycle temporel $C_l$. Les cycles temporels sont successifs, périodiques et de préférence identiques où $l$ est un indice identifiant chaque cycle temporel $C_l$. Pour illustrer simplement l'invention, on considère des cycles temporels $C_l$ dont la durée correspond à 24 heures. Le cycle temporel $C_l$ est divisé en un nombre $K = 24$ de périodes temporelles successives $T_1$, ..., $T_{24}$.

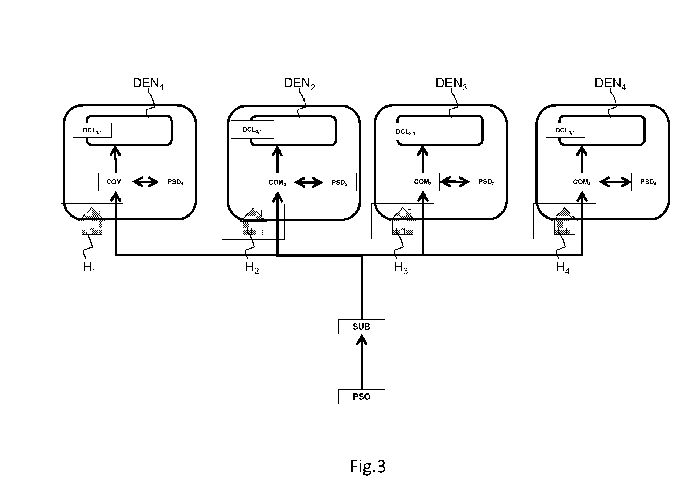

On se place dans une situation, telle que celle représentée sur la figure 3 où une station SUB est configurée pour alimenter en énergie une pluralité de réseaux locaux d'énergie $DEN_i$ ou $1 \leq i \leq 4$ identiques au réseau $DEN_1$ de la figure 1, et où la station SUB n'est pas en mesure de fournir simultanément à ces quatre réseaux $DEN_i$ un niveau d'énergie cumulé à la hauteur de celui que les réseaux locaux consomment.

Comme expliqué plus haut, le moyen de stockage d'énergie $PSD_{DENi}$ de chaque réseau local $DEN_i$ constitue une réserve d'énergie du réseau $DEN_i$. Cette réserve d'énergie peut être utilisée, tant qu'elle n'est pas épuisée, en substitution à une alimentation directe en énergie par l'opérateur PSO. La station SUB peut donc classer les réseaux $DEN_i$ à alimenter directement en énergie suivant un ordre de priorité ou autrement dit d'urgence qu'il y a à les alimenter en énergie pour éviter une pénurie d'énergie.

Dans ce qui suit, deux modes de réalisation de système et de méthode de gestion de l'alimentation en énergie d'un réseau local d'énergie sont successivement présentés.

Un premier mode de réalisation est avantageux en ce qu'il met en oeuvre un pilotage de mode de dispositif de commutation simple : un mode est assigné à un dispositif de commutation au démarrage d'une période temporelle $T_{k+1}$ pour l'intégralité de la durée de la période temporelle $T_{k+1}$.

Un second mode de réalisation est avantageux en ce qu'il ne nécessite qu'un nombre réduit de calculs car les réseaux locaux son classés suivant le niveau $CSL_{DENi}$ d'énergie stockée dans le moyen de stockage d'énergie $PSD_{DENi}$ en fin de période temporelle $T_k$. Par la suite, ce niveau d'énergie sera noté $CSL_{DENi, Tk}$

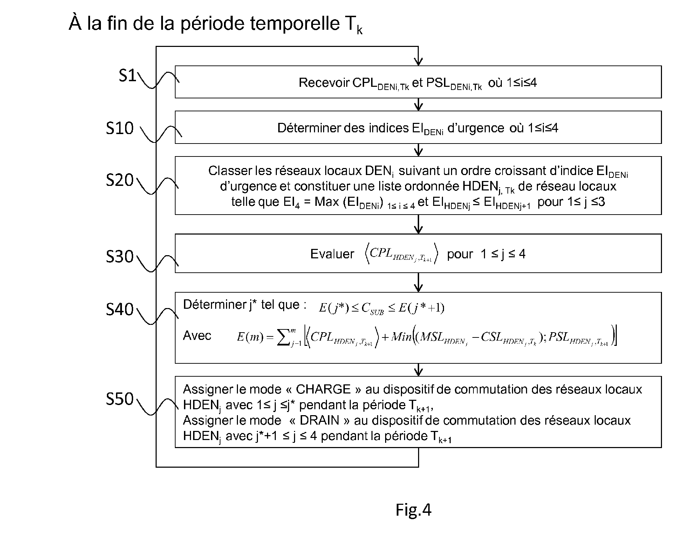

On décrit dans une première partie le premier mode de réalisation de l'invention en s'appuyant sur l'ordinogramme de la figure 4 mis en oeuvre pour le système représenté sur la figure 3.

A la fin d'une période temporelle $T_k$, dans une étape S1, la station SUB reçoit un premier niveau $CSL_{DENi,Tk}$ d'énergie stockée dans les moyens de stockage $PSD_{DENi}$ et un second niveau $CPL_{DENi,Tk}$ d'énergie consommée par le dispositif client $DCL_{DENi}$ pendant ladite période temporelle $T_k$ pour $1 \leq i \leq 4$. Dans ce premier mode de réalisation, la station SUB détermine un mode $MOD_{DENi,Tk}$ de configuration dans lequel opère chaque dispositif $COM_{DENi}$ de commutation parmi le premier et le second mode.

Le premier niveau $CSL_{DENi, Tk}$ d'énergie est de préférence délivré par chaque moyen de stockage $PSD_{DENi}$

au dispositif $COM_{DENi}$ de commutation du réseau local DENi auquel il est connecté. Les premiers niveaux $CSL_{DENi,Tk}$ sont immédiatement relayés à la station SUB. Dans la situation représentée sur la figure 3, un seul moyen $PSD_{DENi}$ de stockage d'énergie est connecté au réseau local $DEN_i$. Si plusieurs moyens de stockage d'énergie étaient connectés au réseau $DEN_i$, chacun d'eux délivrerait un premier niveau d'énergie et c'est ensuite un premier niveau d'énergie cumulant les différents niveaux d'énergie stockées dans ces moyens de stockage d'énergie qui seraient transmis à la station SUB en relation avec le réseau local $DEN_i$.

Le second niveau $CPL_{DENi,Tk}$ d'énergie est de préférence délivré directement par chaque dispositif $COM_{DENi}$ de commutation à la station SUB. Dans la situation représentée sur la figure 3, un seul dispositif $DCL_{i,1}$ client est connecté au réseau local DENi et est susceptible de consommer de l'énergie. Si une pluralité de dispositif clients était connectée au réseau DENi, le dispositif $COM_{DENi}$ délivrerait à la station SUB un second niveau d'énergie cumulant les différents niveaux d'énergie consommée par cette pluralité de dispositifs clients.

Dans une étape S10, la station SUB détermine des indices d'urgence $EI_{DENi}$ indiquant la priorité à alimenter les réseaux DENi en énergie par une source extérieure pendant la période $T_{k+1}$, c'est-à-dire indiquant la priorité dans laquelle un dispositif $COM_{DENi}$ de commutation doit être placé dans le mode « CHARGE » pendant la période $T_{k+1}$. A la fin de chaque période temporelle $T_k$, il s'agit donc d'attribuer une valeur aux indices d'urgence $EI_{DENi}$ pour chaque i compris entre 1 et 4.

Préférentiellement, un tel indice d'urgence peut s'exprimer sous la forme du premier niveau $CSL_{DENi,Tk}$ d'énergie. Dans cette hypothèse, plus le niveau d'énergie stockée dans le (ou les) moyen(s) de stockage d'énergie d'un réseau local DENi est bas, et plus il y a urgence à placer le dispositif $COM_{DENi}$ de commutation du réseau local $DEN_i$ dans le mode « CHARGE ».

Alternativement, l'indice ($EI_{DENi}$) d'urgence est une probabilité d'absence de pénurie d'énergie dans le moyen de stockage d'énergie ($PSD_{DENi}$) pendant la période temporelle $T_{k+1}$ qui est déterminée en faisant un hypothèse de processus de modulation Markovienne (« Markov modulated demand process » en anglais). Dans cette hypothèse, plus la probabilité d'absence de pénurie d'énergie dans le (ou les) moyen(s) de stockage d'énergie d'un réseau local $DEN_i$ est basse, et plus il y a urgence à placer le dispositif $COM_{DENi}$ de commutation du réseau local $DEN_i$ dans le mode « CHARGE ».

Dans une étape S20, la station classe les réseaux locaux DENi suivant un ordre croissant d'indices d'urgence. Exprimé autrement, la station SUB constitue une liste ordonnée $HDEN_j$, de réseau locaux telle que $EI_4 = Max\ (EI_{DENi})_{1 \le i \le 4}$ et $EI_{HDENj} \le EI_{HDENj+1}$ pour $1 \le j \le 3$. La liste ordonnée $HDEN_j$ comporte tous les réseaux locaux $DEN_i$ rangés suivant l'ordre d'urgence croissant.

Lorsque tous les réseaux locaux $DEN_i$ ne peuvent pas être alimentés en énergie simultanément par la station SUB en raison d'un niveau d'énergie limite qu'elle est capable de fournir pendant la période temporelle Tk, la station SUB doit déterminer un indice j* permettant de séparer la liste ordonnée en deux sous-listes : Une première sous-liste regroupe les réseaux locaux dont le rang j dans la liste ordonnée $HDEN_j$ est compris entre 1 et j* c'est-à-dire avec $1 \le j \le j^*$. Une deuxième sous-liste regroupe les réseaux locaux dont le rang j dans la liste ordonnée $HDEN_j$ est compris entre j*+1 et 4 c'est-à-dire avec $j^*+1 \le j \le 4$.

La station SUB assigne pendant la période $T_{k+1}$ le mode « CHARGE » aux dispositifs de commutation connectés aux réseaux locaux faisant partie de la première liste extraite de la liste ordonnée établie à la fin de la période $T_k$.

La station SUB assigne pendant la période $T_{k+1}$ le mode « DRAIN » aux dispositifs de commutation connecté aux réseaux locaux faisant partie de la seconde liste extraite de la liste ordonnée établie à la fin de la période $T_k$.

Cette double action est réalisée au cours d'une étape S50.

Connaissant la capacité en niveau d'énergie $C_{SUB}$ à fournir, on cherche j* tel que le niveau d'énergie $C_{SUB}$ est compris entre un premier niveau d'énergie cumulée que la station SUB fournirait si elle alimentait en énergie les j* premiers éléments de la liste ordonnée $HDEN_j$ pendant la période $T_{k+1}$ et un second niveau d'énergie cumulée que la station SUB fournirait si elle alimentait en énergie les j*+1 premiers éléments de la liste ordonnée $HDEN_j$ pendant la période $T_{k+1}$.

Les étapes S30 et S40 représentées sur la figure 4 constituent un exemple de détermination de l'indice critique j*.

L'étape S30 consiste à évaluer la (future) consommation $\left\langle CPL_{HDEN_j, T_{k+1}} \right\rangle$ du ou des dispositifs clients connectés aux réseaux locaux $HDEN_j$ pour $1 \le j \le 4$ en vue du l'estimation d'un niveau E(m) d'énergie cumulé correspondant à une estimation du niveau d'énergie consommé par les m premiers réseaux locaux figurant dans la liste ordonnée $HDEN_j$. E(m) est naturellement fonction de $\sum_{j=1}^{j=m} \left\langle CPL_{HDEN_j, T_{k+1}} \right\rangle$. E(m) comporte également la somme des niveaux d'énergie employés pour charger le moyen de stockage d'énergie associé au réseau $HDEN_j$ lorsque le dispositif de commutation du réseau HDENj est en mode « CHARGE ». Ce niveau d'énergie ne peut pas excéder

$$MSL_{HDEN_j} - CSL_{HDEN_j,T_k}$$ où MSL$_{HDENj}$ est le niveau maximum d'énergie que peut contenir le moyen de stockage d'énergie connecté au réseau local HDEN$_j$. Lorsqu'il existe, en outre, une limite en terme de débit de niveau d'énergie sur le chemin liant la station SUB et le moyen de stockage ou une limité liée à la vitesse de stockage d'énergie par le moyen de stockage, on note PSL$_{HDENj;Tk}$ le niveau d'énergie maximum transférable jusqu'au moyen de stockage connecté au réseau local HDEN$_j$ pendant la période temporelle $T_{k+1}$, et dans cette situation le niveau d'énergie qui peut au maximum être employé pour charger en énergie le moyen de stockage vaut

$$Min\left((MSL_{HDEN_j} - CSL_{HDEN_j,T_k}); PSL_{HDEN_j,T_{k+1}}\right).$$

Et ainsi, E(m) peut être exprimé sous la forme :

$$E(m) = \sum_{j=1}^{m} \left[\left(CPL_{HDEN_j,T_{k-1}}\right) + Min\left((MSL_{HDEN_j} - CSL_{HDEN_j,T_k}); PSL_{HDEN_j,T_{k+1}}\right)\right]$$

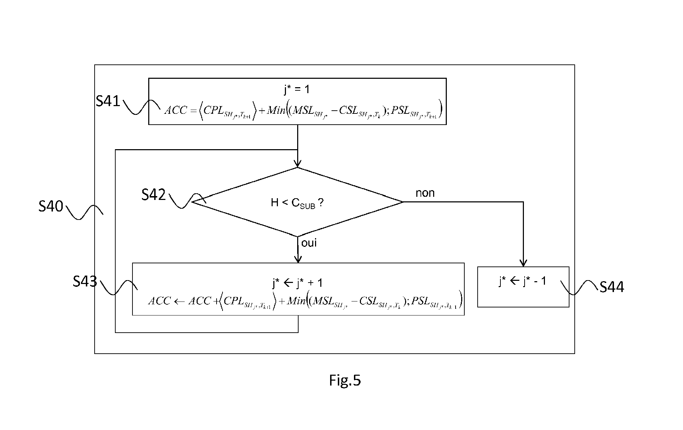

L'étape S40 présentée sur l'ordinogramme sur la figure 5 correspond à un exemple de méthode de détermination de l'indice critique j*. Cette méthode consiste à chercher le premier nombre entier j*, ici compris entre 1 et 4 tel que E (j*) ≤ C$_{SUB}$ ≤ E(j*+1).

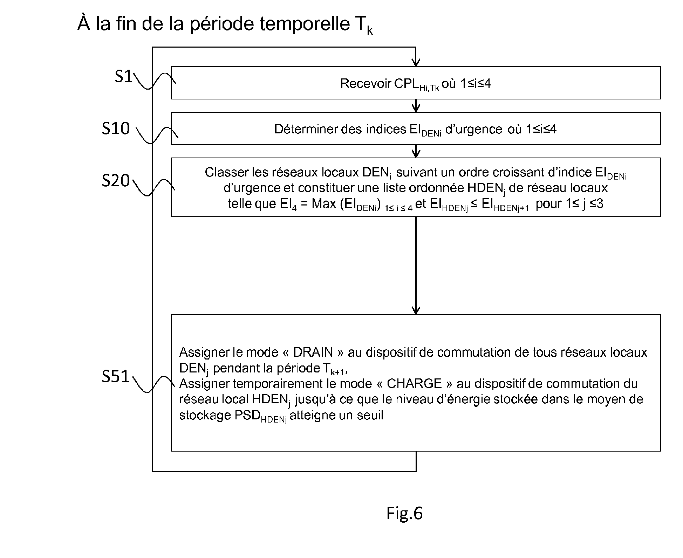

On décrit dans une seconde partie le second mode de réalisation de l'invention en s'appuyant sur l'ordinogramme de la figure 6 mis en oeuvre pour le système représenté sur la figure 3.

L'étape S1 du second mode de réalisation diffère de l'étape S1 du premier mode de réalisation en ce que uniquement le premier niveau CSL$_{DENi,Tk}$ d'énergie stockée dans les moyens de stockage PSD$_{DENi}$ à la fin de la période Tk est reçu par la station SUB.

Les étapes S10 et S20 du second mode de réalisation sont identiques aux étapes S10 et S20 du premier mode de réalisation.

L'étape S51 du second mode de réalisation se distingue de l'étape S50 du premier mode de réailsation en ce que :

Le mode « DRAIN » est assigné aux dispositifs COM$_{DENi}$ de commutation de tous les réseaux locaux DEN$_i$ sauf à un dispositif de commutation COM$_{DENi}$ d'un des réseaux locaux auquel est assigné temporairement le mode « CHARGE ». Cette assignation temporaire du mode « CHARGE » s'achève lorsque le niveau d'énergie stocké dans le moyen d'énergie associé à ce réseau local atteint un de niveau d'énergie PLL$_{DENi}$ prédéfini, par exemple quand le niveau d'énergie atteint le niveau maximum, MSL$_{DENi}$, c'est-à-dire que lorsque la capacité maximum du moyen de stockage est atteinte.

Une fois que le niveau d'énergie à atteint le seuil, la station SUB assigne au dispositif de commutation le mode « DRAIN », et la station SUB assigne temporairement le mode « CHARGE » à un nouveau dispositif de commutation. L'ordre dans lequel les dispositifs de commutation sont successivement placés dans le mode « CHARGE » est celui dans lequel les réseaux locaux HDEN$_j$ figurent dans la liste ordonnée.

En d'autre terme, dans un premier temps, le dispositif de commutation du réseau local HDEN$_1$ est le seul dispositif de commutation placé dans le mode CHARGE, puis si le niveau d'énergie stockée dans le moyen de stockage d'énergie connecté au réseau HDEN$_j$ atteint le seuil avant la fin de la période $T_{k+1}$, il est placé dans le mode « DRAIN » et l'opération est répétée de manière itérative avec le dispositif de commutation du réseau local HDEN$_2$ et les autres réseau locaux HDEN$_j$ jusqu'à la fin de la période temporelle $T_{k+1}$.

Avantageusement, chaque moyen de stockage d'énergie comporte soit des moyens pour délivrer à la station SUB, par exemple transitant le dispositif de commutation du réseau local, une information indiquant que le niveau d'énergie stockée dans le dit moyen de stockage d'énergie à atteint le seuil, soit des moyens pour délivrer à la station SUB, par exemple transitant le dispositif de commutation du réseau local, en temps réel une information indiquant le niveau d'énergie stockée dans leit moye nde stockage d'énergie. Dans ce cas la station SUB doit comporter des moyens pour analyser ladite information afin de changer l'assignation du mode « CHARGE » en mode « DRAIN » lorsque ce niveau d'énergie a atteint ledit seuil.

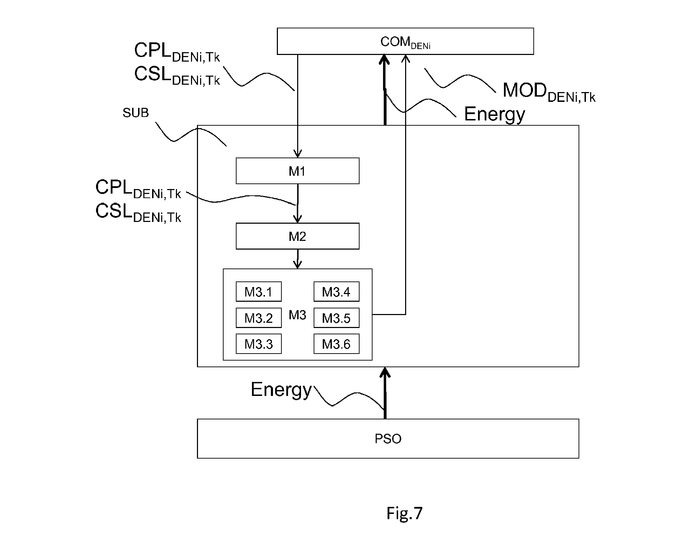

La figure 7 représente l'architecture d'une station SUB pour gérer l'alimentation en énergie d'un nombre n de réseaux DEN$_i$ locaux d'énergie où n≥2 et 1 ≤ i ≤n selon un mode de réalisation de l'invention comme représenté sur la figure 3.

Selon les modes de réalisation de l'invention la station SUB comporte :

- un moyen M1 configuré pour recevoir à l'issue de la période temporelle $T_k$ un premier niveau $CSL_{DENi,Tk}$ d'énergie stockée dans le moyen de stockage d'énergie $PSD_{DENi}$ à l'issue de la période temporelle $T_k$ ;
- un moyen M2 configuré pour stocker lesdits premiers niveaux $CPL_{DENi,Tk}$.
- un moyen M3 configuré pour déterminer et assigner à chaque dispositif $COM_{DENi}$ de commutation :

  o Un premier mode DRAIN dans lequel le moyen $PSD_{DENi}$ de stockage d'énergie fournit de l'énergie audit réseau $DEN_i$; ou
  o Un second mode CHARGE dans lequel la station SUB fournit de l'énergie simultanément audit réseau $DEN_i$ et audit moyen $PSD_{DENi}$ de stockage d'énergie.

Avantageusement, le moyen M1 est en outre configuré pour recevoir à l'issue de la période temporelle $T_k$ un second niveau $CPL_{DENi,Tk}$ d'énergie consommée par le dispositif client $DCL_{DENi}$ pendant ladite période temporelle $T_k$ **et** le moyen M2 est en outre configuré pour stocker et lesdits seconds niveaux $CSL_{DENi,Tk}$.

Avantageusement, le moyen M3 comporte :

un moyen M3.1 configuré pour déterminer, à l'issue de la période temporelle $T_k$, un indice $EI_{DENi}$ d'urgence définissant un ordre de priorité pour assigner le second mode CHARGE au dispositif $COM_{DENi}$ de commutation pour la période $T_{k+1}$, lesdits indices $EI_{DENi}$ d'urgence sont déterminés à partir desdits premiers niveaux $CSL_{DEN1,Tk}$, ..., $CSL_{DENi,Tk}$, ...,$CSL_{DENn,Tk}$ associés au réseau DENi stockés dans la station SUB;
un moyen M3.2 configuré pour classer, à l'issue de la période temporelle Tk, les réseaux locaux DENi suivant l'ordre croissant des indices d'urgence EIDENi et pour constituer ainsi une liste ordonnée de réseaux locaux $HDEN_j$ où $1 \le j \le n$ ; les éléments $HDEN_j$ de ladite liste ordonnée ont des indices $EI_{HDENj}$ d'urgence tels que $EI_{HDENj} \le EI_{HDENj+1}$ pour $1 \le j \le n-1$ et $EI_{HDENN} = MaxEI_{DENi} 1 \le i \le n$ ;
un moyen M3.3 configuré pour estimer, à l'issue de la période temporelle Tk, une consommation en énergie $<PRL_{DENi,Tk+1}>$ du dispositif client $DCL_{DENj}$ pour la période temporelle $T_{k+1}$ à partir des premiers niveaux $CPL_{i,Tk}$ d'énergie stockés pour les périodes temporelles antérieures.

Avantageusement, le moyen M3 comporte en outre :

- un moyen M3.4 configuré pour déterminer, à l'issue de la période temporelle $T_k$, à partir des estimations de consommation en énergie $<PRL_{DENi,Tk+1}>$ du dispositif client $DCL_{DENi}$ pour la période temporelle $T_{k+1}$, une valeur d'indice critique j* de telle sorte que le niveau d'énergie $C_{SUB}$ est compris entre un premier niveau d'énergie cumulée que la station SUB fournirait si elle assignait le second mode CHARGE les j* premiers réseaux locaux figurant dans la liste ordonnée $HDEN_j$ pendant la période $T_{k+1}$ et un second niveau d'énergie cumulée que la station SUB fournirait si elle assignait le second mode CHARGE les j*+1 premiers réseaux locaux figurant dans la liste ordonnée $HDEN_j$ pendant la période $T_{k+1}$;
- un moyen M3.5 configuré pour assigner pendant la période temporelle $T_{k+1}$ le second mode CHARGE aux dispositifs de commutation des j* premiers réseaux locaux figurant dans la liste ordonnée $HDEN_j$ et le premier mode DRAIN aux dispositifs de commutation des n-j* derniers réseaux locaux figurant dans la liste ordonnée $HDEN_j$.

Avantageusement, le moyen M3 comporte en outre un moyen M3.6 configuré pour assigner au cours de la période temporelle $T_{k+1}$ le premier mode DRAIN à tous les dispositifs de commutation des réseaux locaux figurant dans la liste ordonnée $HDEN_j$, et ledit moyen M3.6 est en outre configuré pour assigner temporairement le second mode CHARGE aux dispositifs de commutation des premiers réseaux locaux pris dans l'ordre de la liste ordonnée $HDEN_j$ jusqu'à ce que le niveau d'énergie stocké dans le moyen de stockage d'énergie du réseau local atteigne un seuil de niveau d'énergie $PLL_{DENi}$.

Bien que l'invention ait été décrite en liaison avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.


**Revendications**

1. Système de gestion de l'alimentation en énergie d'un nombre n de réseaux ($DEN_i$) locaux d'énergie où $n \ge 2$ et $1 \le i \le n$, chaque réseau ($DEN_i$) local d'énergie comportant au moins un dispositif client ($DCL_{DENi}$) pouvant consommer de l'énergie circulant sur ledit réseau ($DEN_i$), **caractérisé en ce que** ledit système comporte un dispositif ($COM_{DENi}$) de commutation connecté à chaque réseau ($DEN_i$), un moyen ($PSD_{DENi}$) de stockage d'énergie connecté audit réseau ($DEN_i$) au travers du dispositif ($COM_{DENi}$) de commutation, et une station (SUB) pour alimenter en énergie

les n réseaux (DEN$_i$) au travers de son dispositif (COM$_{DENi}$) de commutation, la station (SUB) recevant l'énergie d'un opérateur (PSO), **et en ce que** la station (SUB) est configurée pour déterminer et assigner à chaque dispositif (COM$_{DENi}$) de commutation :

- Un premier mode (DRAIN) dans lequel le moyen (PSD$_{DENi}$) de stockage d'énergie fournit de l'énergie audit réseau (DEN$_i$) ; ou
- Un second mode (CHARGE) dans lequel la station (SUB) fournit de l'énergie simultanément audit réseau (DEN$_i$) et audit moyen (PSD$_{DENi}$) de stockage d'énergie.

**2.** Système selon la revendication 1, la station (SUB) considérant un nombre K de périodes temporelles successives (T$_k$) où $1 \leq k \leq K$, **caractérisé en ce que** chaque dispositif (COM$_{DENi}$) de commutation comporte des moyens pour délivrer à la station (SUB) un premier niveau (CSL$_{DENi,Tk}$) d'énergie stockée dans le moyen de stockage d'énergie (PSD$_{DENi}$) à l'issue de chaque période temporelle (T$_k$) **et en ce que** la station (SUB) détermine à l'issue de la période temporelle (T$_k$) un indice (EI$_{DENi}$) d'urgence définissant un ordre de priorité pour assigner le second mode (CHARGE) au dispositif (COM$_{DENi}$) de commutation pour la période (T$_{k+1}$) à partir dudit premier niveau (CSL$_{DENi,Tk}$).

**3.** Système selon la revendication 2, **caractérisé en ce que** à l'issue de la période temporelle (Tk), la station (SUB) classe les réseaux locaux (DEN$_i$) suivant l'ordre croissant des indices d'urgence (EI$_{DENi}$) de telle sorte qu'elle constitue une liste ordonnée de réseaux locaux (HDEN$_j$) où $1 \leq j \leq n$ ; les éléments (HDEN$_j$) de ladite liste ordonnée ont des indices (EI$_{HDENj}$) d'urgence tels que EI$_{HDENj}$, $\leq$ EI$_{HDENj+1}$ pour $1 \leq j \leq n-1$ et EI$_{HDENN}$ = Max(EI$_{DENi}$)$_{1 \leq i \leq n}$.

**4.** Système selon la revendication 3, la station (SUB) étant limitée à fournir un niveau d'énergie (C$_{SUB}$) pendant la période temporelle (T$_k$), **caractérisé en ce que** à l'issue de la période temporelle (T$_k$), la station (SUB) détermine une valeur d'indice critique (j*) de telle sorte que le niveau d'énergie (C$_{SUB}$) est compris entre un premier niveau d'énergie cumulée que la station (SUB) fournirait si elle assignait le second mode (CHARGE) aux j* premiers éléments de la liste ordonnée (HDEN$_j$) pendant la période (T$_{k+1}$) et un second niveau d'énergie cumulée que la station (SUB) fournirait si elle assignait le second mode (CHARGE) aux j*+1 premiers éléments de la liste ordonnée (HDEN$_j$) pendant la période (T$_{k+1}$) **et en ce que** la station (SUB) assigne pour la période temporelle (T$_{k+1}$) le second mode (CHARGE) aux dispositifs (COM$_{HDENj}$) de commutation des j* premiers éléments (HDEN$_j$) de la liste ordonnée et le premier mode (DRAIN) aux dispositifs (COM$_{HDENj}$) de commutation des n-j* derniers éléments (HDEN$_j$) de ladite liste ordonnée.

**5.** Système selon la revendication 4, **caractérisé en ce que** chaque dispositif (COM$_{DENi}$) de commutation délivre à la station (SUB), à l'issue de la période temporelle (T$_k$), un second niveau (CPL$_{DENi,Tk}$) d'énergie consommée par le dispositif client (DCL$_{DENi}$) pendant ladite période temporelle (T$_k$), **en ce que** la station (SUB) comporte des moyens pour stocker lesdits premiers niveaux (CSL$_{DENi,Tk}$) et lesdits seconds niveaux (CPL$_{DENi,Tk}$), **en ce que** la station (SUB) estime, à l'issue de la période temporelle (T$_k$), une consommation en énergie (<PRL$_{DENi,Tk+1}$>) du dispositif client (DCL$_{DENi}$) pour la période temporelle (T$_{k+1}$) à partir des seconds niveaux (CPL$_{DENi,Tk}$) d'énergie stockés pour les périodes temporelles antérieures **et en ce que** la station (SUB) détermine la valeur d'indice critique (j*) à partir desdites consommation en énergie <PRL$_{DENi,Tk+1}$>).

**6.** Système selon la revendication 3, la station (SUB) étant limitée à fournir un niveau d'énergie (C$_{SUB}$) pendant la période temporelle (T$_k$), **caractérisé en ce que** la station (SUB) comporte :

- un moyen pour assigner au début de la période temporelle (T$_{k+1}$) le premier mode (DRAIN) à tous les dispositifs de commutation des réseaux (DEN$_i$) et
- un moyen pour assigner le second mode (CHARGE) aux dispositifs de commutation des réseaux (DEN$_i$) jusqu'à ce que le niveau d'énergie stocké dans le moyen de stockage d'énergie correspondant soit maximum, lesdites assignations étant réalisées dans l'ordre de la liste ordonnée (HDEN$_j$).

**7.** Système selon l'une quelconque des revendication 3 à 6, **caractérisé en ce que** l'indice (EI$_{DENi}$) d'urgence a une valeur représentative du premier niveau (CSL$_{DENi,Tk}$) d'énergie ou **en ce que** l'indice (EI$_{DENi}$) d'urgence est une probabilité de pénurie d'énergie du moyen de stockage d'énergie (PSD$_{DENi}$) pendant la période (T$_{k+1}$) déterminée en faisant une hypothèse de processus de modulation Markovienne.

**8.** Station (SUB) pour gérer l'alimentation en énergie d'un nombre n de réseaux (DEN$_i$) locaux d'énergie où $n \geq 2$ et $1 \leq i \leq n$, chaque réseau (DEN$_i$) local d'énergie comportant au moins un dispositif client (DCL$_{DENi}$) pouvant consommer de l'énergie circulant sur ledit réseau (DEN$_i$), un dispositif (COM$_{DENi}$) de commutation étant connecté à chaque

réseau (DEN$_i$), un moyen (PSD$_{DENi}$) de stockage d'énergie étant connecté audit réseau (DEN$_i$) au travers du dispositif (COM$_{DENi}$) de commutation, et une station (SUB) recevant de l'énergie d'un opérateur (PSO) et pouvant alimenter en énergie les n réseaux (DEN$_i$) au travers de son dispositif (COM$_{DENi}$), la station (SUB) considérant un nombre K de périodes temporelles successives (Tk) où $1 \leq k \leq K$, **caractérisée en ce qu'**elle comporte :

- un moyen (M1) configuré pour recevoir à l'issue de la période temporelle (T$_k$) un premier niveau (CSL$_{DENi,Tk}$) d'énergie stockée dans le moyen de stockage d'énergie (PSD$_{DENi}$) à l'issue de la période temporelle (T$_k$) ;
- un moyen (M2) configuré pour stocker lesdits premiers niveaux (CPL$_{DENi,Tk}$).
- un moyen (M3) configuré pour déterminer et assigner à chaque dispositif (COM$_{DENi}$) de commutation :

o Un premier mode (DRAIN) dans lequel le moyen (PSD$_{DENi}$) de stockage d'énergie fournit de l'énergie audit réseau (DEN$_i$) ; ou
o Un second mode (CHARGE) dans lequel la station (SUB) fournit de l'énergie simultanément audit réseau (DEN$_i$) et audit moyen (PSD$_{DENi}$) de stockage d'énergie.

9. Station (SUB) selon la revendication précédente, **caractérisée en ce que le** moyen (M1) est en outre configuré pour recevoir à l'issue de la période temporelle (T$_k$) un second niveau (CPL$_{DENi,Tk}$) d'énergie consommée par le dispositif client (DCL$_{DENi}$) pendant ladite période temporelle (T$_k$) **et en ce que** le moyen (M2) est en outre configuré pour stocker et lesdits seconds niveaux (CSL$_{DENi,Tk}$).

10. Station (SUB) selon l'une quelconque des revendications 9 ou 10, la station (SUB) étant limitée à fournir un niveau d'énergie (C$_{SUB}$) pendant la période temporelle (T$_k$), **caractérisée en ce que** le moyen (M3) comporte :

- un moyen (M3.1) configuré pour déterminer, à l'issue de la période temporelle (T$_k$), un indice (EI$_{DENi}$) d'urgence définissant un ordre de priorité pour assigner le second mode (CHARGE) au dispositif (COM$_{DENi}$) de commutation pour la période (T$_{k+1}$), lesdits indices (EI$_{DENi}$) d'urgence sont déterminés à partir desdits premiers niveaux (CSL$_{DEN1,Tk}$, .... CSL$_{DENi,Tk}$, ...,CSL$_{DENn,Tk}$) associés au réseau (DEN$_i$) stockés dans la station (SUB);
- un moyen (M3.2) configuré pour classer, à l'issue de la période temporelle (T$_k$), les réseaux locaux (DEN$_i$) suivant l'ordre croissant des indices d'urgence (EI$_{DENi}$) et pour constituer ainsi une liste ordonnée de réseaux locaux (HDEN$_j$) où $1 \leq j \leq n$ ; les éléments (HDEN$_j$) de ladite liste ordonnée ont des indices (EI$_{HDENj}$) d'urgence tels que $EI_{HDENj} \leq EI_{HDENj+1}$ pour $1 \leq j \leq n-1$ et $EI_{HDENN} = Max(EI_{DENi})_{1 \leq i \leq n}$ ;
- un moyen (M3.3) configuré pour estimer, à l'issue de la période temporelle (T$_k$), une consommation en énergie (<PRL$_{DENi,Tk+1}$>) du dispositif client (DCL$_{DENi}$) pour la période temporelle (T$_{k+1}$) à partir des premiers niveaux (CPL$_{DENi,Tk}$) d'énergie stockés pour les périodes temporelles antérieures à la période temporelle (T$_{k+1}$).

11. Station (SUB) selon la revendication 11, **caractérisée en ce que** le moyen (M3) comporte en outre :

- un moyen (M3.4) configuré pour déterminer, à l'issue de la période temporelle (T$_k$), à partir des estimations de consommation en énergie (<PRL$_{DENi,Tk+1}$>) du dispositif client (DCL$_{DENi}$) pour la période temporelle (T$_{k+1}$), une valeur d'indice critique (j*) de telle sorte que le niveau d'énergie (C$_{SUB}$) est compris entre un premier niveau d'énergie cumulée que la station (SUB) fournirait si elle assignait le second mode (CHARGE) les j* premiers réseaux locaux figurant dans la liste ordonnée (HDEN$_j$) pendant la période (T$_{k+1}$) et un second niveau d'énergie cumulée que la station (SUB) fournirait si elle assignait le second mode (CHARGE) les j*+1 premiers réseaux locaux figurant dans la liste ordonnée (HDEN$_j$) pendant la période (T$_{k+1}$);
- un moyen (M3.5) configuré pour assigner pendant la période temporelle (T$_{k+1}$) le second mode (CHARGE) aux dispositifs de commutation des j* premiers réseaux locaux figurant dans la liste ordonnée (HDEN$_j$) et le premier mode (DRAIN) aux dispositifs de commutation des n-j* derniers réseaux locaux figurant dans la liste ordonnée (HDEN$_j$).

12. Station (SUB) selon la revendication 11, **caractérisée en ce que** le moyen (M3) comporte en outre un moyen (M3.6) configuré pour assigner au cours de la période temporelle (T$_{k+1}$) le premier mode (DRAIN) à tous les dispositifs de commutation des réseaux locaux figurant dans la liste ordonnée (HDEN$_j$), **et en ce que** ledit moyen (M3.6) est en outre configuré pour assigner temporairement le second mode (CHARGE) aux dispositifs de commutation des premiers réseaux locaux pris dans l'ordre de la liste ordonnée (HDEN$_j$) jusqu'à ce que le niveau d'énergie stocké dans le moyen de stockage d'énergie du réseau local atteigne un seuil de niveau d'énergie (PLL$_{DENi}$).

13. Procédé de gestion de l'alimentation en énergie d'un nombre n de réseaux (DENi) locaux d'énergie où $n \geq 2$ et $1 \leq i \leq n$, chaque réseau (DEN$_i$) local d'énergie comportant au moins un dispositif client (DCL$_{DENi}$) pouvant consommer de l'énergie circulant sur ledit réseau (DEN$_i$), un dispositif (COM$_{DENi}$) de commutation étant connecté à chaque réseau (DEN$_i$), un moyen (PSD$_{DENi}$) de stockage d'énergie étant connecté audit réseau (DEN$_i$) au travers du dispositif (COM$_{DENi}$) de commutation, et une station (SUB) pouvant alimenter en énergie les n réseaux (DEN$_i$) au travers de son dispositif (COM$_{DENi}$) de commutation, la station (SUB) recevant l'énergie d'un opérateur (PSO), la station (SUB) considérant un nombre K de périodes temporelles successives (Tk) où $1 \leq k \leq K$, la station (SUB) étant configurée pour déterminer et assigner à chaque dispositif (COM$_{DENi}$) de commutation pendant au moins une fraction de la période temporelle (T$_{k+1}$) :

o Un premier mode (DRAIN) dans lequel le moyen (PSD$_{DENi}$) de stockage d'énergie fournit de l'énergie audit réseau (DEN$_i$) ; ou

o Un second mode (CHARGE) dans lequel la station (SUB) fournit de l'énergie simultanément audit réseau (DEN$_i$) et audit moyen (PSD$_{DENi}$) de stockage d'énergie ;

**caractérisé en ce que,** au niveau de la station (SUB), à l'issue de la période temporelle (T$_k$), il comporte les étapes consistant à :

- (S1) recevoir des dispositifs de commutation de tous les réseaux locaux (DENi) et stocker un premier niveau (CSL$_{DENi,Tk}$) d'énergie stockée dans le moyen de stockage d'énergie (PSD$_{DENi}$) à l'issue de chaque période (T$_k$) ;
- (S10) déterminer un indice (EI$_{DENi}$) d'urgence définissant un ordre d'urgence pour assigner le second mode (CHARGE) au dispositif (COM$_{DENi}$) de commutation pour la période (T$_{k+1}$), lesdits indices (EI$_{DENi}$) d'urgence sont déterminés à partir desdits premiers niveaux (CSL$_{DEN1,Tk}$, ...,CSL$_{DENi,Tk}$, ...,CSL$_{DENn,Tk}$) associés au réseau (DEN$_i$);
- (S20) classer les réseaux locaux (DEN$_i$) suivant l'ordre croissant des indices (EI$_{DENi}$) d'urgence et constituer ainsi une liste ordonnée de réseaux locaux (HDEN$_j$) où $1 \leq j \leq n$, les réseaux locaux (HDEN$_j$) figurant dans ladite liste ordonnée ont des indices (EI$_{HDENj}$) d'urgence tels que EI$_{HDENj} \leq$ EI$_{HDENj+1}$ pour $1 \leq j \leq n-1$ et EI$_{HDENN} =$ Max(EI$_{DENi}$)$_1 \leq i \leq n$ ;
- (S50 ; S51) assigner le second mode (CHARGE) à au moins un dispositif de commutation pour la période (T$_{k+1}$) choisi à partir en fonction du rang j que le réseau local (HDEN$_j$) occupe dans ladite liste ordonnée.

**14.** Procédé selon la revendication 13, **caractérisé en ce qu'**il comporte en outre les étapes consistant à

- (S1) recevoir de tous les dispositifs (COM$_{DENi}$) de commutation un second niveau (CPL$_{DENi,Tk}$) d'énergie consommée par le dispositif client (DCL$_{DENi}$) pendant ladite période (T$_k$) et stocker lesdits second niveau (CPL$_{DENi,Tk}$) reçus ;
- (S30) estimer une consommation en énergie (<PRL$_{i,Tk+1}$>) du dispositif client (DCL$_{DENi}$) pour la période temporelle (T$_{k+1}$) à partir desdits premiers niveaux (CPL$_{i,Tk}$) d'énergie stockés ;
- (S40) déterminer, à l'issue de la période temporelle (T$_k$), à partir des estimations de consommation en énergie (<PRL$_{i,Tk+1}$>) du dispositif client (DCL$_{DENi}$) pour la période temporelle (T$_{k+1}$), une valeur d'indice critique (j*) de telle sorte que le niveau d'énergie (C$_{SUB}$) est compris entre un premier niveau d'énergie cumulée que la station (SUB) fournirait si elle assignait le second mode (CHARGE) aux j* premiers réseaux locaux figurant dans la liste ordonnée (HDEN$_j$) pendant la période (T$_{k+1}$) et un second niveau d'énergie cumulée que la station (SUB) fournirait elle assignait le second mode (CHARGE) les j*+1 premiers réseaux locaux figurant dans la liste ordonnée (HDEN$_j$) pendant la période (T$_{k+1}$)
- (S50) assigner pendant la période temporelle (T$_{k+1}$) le second mode (CHARGE) aux dispositifs de commutation des j* premiers réseaux locaux figurant dans la liste ordonnée (HDEN$_j$) et le premier mode (DRAIN) aux dispositifs de commutation des n-j* derniers réseaux locaux figurant dans la liste ordonnée (HDEN$_j$).

**15.** Procédé selon l'une des revendications 13 ou 14, **caractérisé en ce que** l'indice (EI$_{DENi}$) d'urgence a une valeur représentative du premier niveau (CSL$_{DENi}$) d'énergie ou **en ce que** l'indice (EI$_{DENi}$) d'urgence est une probabilité d'absence de pénurie d'énergie du moyen de stockage d'énergie (PSD$_{DENi}$) pendant la période (T$_{k+1}$) qui est déterminée en faisant une hypothèse de processus de modulation Markovienne.

Fig.1

MOD = « DRAIN »

MOD = « CHARGE »

Fig.2a

Fig.2b

Fig.3

À la fin de la période temporelle $T_k$

**S1** — Recevoir $CPL_{DENi,Tk}$ et $PSL_{DENi,Tk}$ où $1 \leq i \leq 4$

**S10** — Déterminer des indices $EI_{DENi}$ d'urgence où $1 \leq i \leq 4$

**S20** — Classer les réseaux locaux $DEN_i$ suivant un ordre croissant d'indice $EI_{DENi}$ d'urgence et constituer une liste ordonnée $HDEN_{j,Tk}$ de réseau locaux telle que $EI_4 = Max\,(EI_{DENi})_{1 \leq i \leq 4}$ et $EI_{HDENj} \leq EI_{HDENj+1}$ pour $1 \leq j \leq 3$

**S30** — Evaluer $\left\langle CPL_{HDEN_j,T_{k+1}} \right\rangle$ pour $1 \leq j \leq 4$

**S40** — Déterminer j* tel que : $E(j^*) \leq C_{SUB} \leq E(j^*+1)$

Avec $E(m) = \sum_{j=1}^{m} \left[ \left\langle CPL_{HDEN_j,T_{k+1}} \right\rangle + Min\left( (MSL_{HDEN_j} - CSL_{HDEN_j,T_k}); PSL_{HDEN_j,T_{k+1}} \right) \right]$

**S50** — Assigner le mode « CHARGE » au dispositif de commutation des réseaux locaux $HDEN_j$ avec $1 \leq j \leq j^*$ pendant la période $T_{k+1}$,
Assigner le mode « DRAIN » au dispositif de commutation des réseaux locaux $HDEN_j$ avec $j^*+1 \leq j \leq 4$ pendant la période $T_{k+1}$

Fig.4

S41 — 
j* = 1
$$ACC = \left\langle CPL_{SH_{j^*},T_{k+1}} \right\rangle + Min\left((MSL_{SH_{j^*}} - CSL_{SH_{j^*},T_k}); PSL_{SH_{j^*},T_{k+i}}\right)$$

S40

S42 — $H < C_{SUB}$ ?

non

oui

S43 — 
j* ← j* + 1
$$ACC \leftarrow ACC + \left\langle CPL_{SH_{j^*},T_{k+1}} \right\rangle + Min\left((MSL_{SH_{j^*}} - CSL_{SH_{j^*},T_k}); PSL_{SH_{j^*},T_{k+i}}\right)$$

j* ← j* - 1 — S44

Fig.5

À la fin de la période temporelle $T_k$

S1 — Recevoir $CPL_{Hi,Tk}$ où $1 \leq i \leq 4$

S10 — Déterminer des indices $EI_{DENi}$ d'urgence où $1 \leq i \leq 4$

S20 — Classer les réseaux locaux $DEN_i$ suivant un ordre croissant d'indice $EI_{DENi}$ d'urgence et constituer une liste ordonnée $HDEN_j$ de réseau locaux telle que $EI_4 = Max\ (EI_{DENi})_{1 \leq i \leq 4}$ et $EI_{HDENj} \leq EI_{HDENj+1}$ pour $1 \leq j \leq 3$

S51 — Assigner le mode « DRAIN » au dispositif de commutation de tous réseaux locaux $DEN_j$ pendant la période $T_{k+1}$,
Assigner temporairement le mode « CHARGE » au dispositif de commutation du réseau local $HDEN_j$ jusqu'à ce que le niveau d'énergie stockée dans le moyen de stockage $PSD_{HDENj}$ atteigne un seuil

Fig.6

$CPL_{DENi,Tk}$
$CSL_{DENi,Tk}$

$COM_{DENi}$

$MOD_{DENi,Tk}$

Energy

SUB

$CPL_{DENi,Tk}$
$CSL_{DENi,Tk}$

M1

M2

M3.1  M3.4

M3.2  M3  M3.5

M3.3  M3.6

Energy

PSO

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BALI.** An Algorithm for Fitting MMPP to IP Traffic Traces. *IEEE Communications Letters,* Février 2007, vol. 11 (2

- **ASMUSSEN.** Applied Probability and Queues. Springer-Verlag, 2003